Europäisches Patentamt

European Patent Office

Office européen des brevets

(19)

(11) Numéro de publication : **0 149 950**
**B1**

# (12) FASCICULE DE BREVET EUROPÉEN

(45) Date de publication du fascicule du brevet :
**17.08.88**

(21) Numéro de dépôt : **84402745.8**

(22) Date de dépôt : **27.12.84**

(51) Int. Cl.⁴ : **H 04 N 5/38**

(54) **Emetteur de télévision comportant un klystron commun pour l'image et le son.**

(30) Priorité : **20.01.84 FR 8400893**

(43) Date de publication de la demande :
**31.07.85 Bulletin 85/31**

(45) Mention de la délivrance du brevet :
**17.08.88 Bulletin 88/33**

(84) Etats contractants désignés :
**DE GB NL SE**

(56) Documents cités :
**EP-A- 0 010 023**
**FR-A- 1 457 632**
**FR-A- 2 392 540**
**LU-A-  47 483**

(73) Titulaire : **THOMSON-LGT LABORATOIRE GENERAL DES TELECOMMUNICATIONS**
**51, boulevard de la République**
**F-78400 Chatou (FR)**

(72) Inventeur : **Simond-Cote, Paul**
**THOMSON-CSF SCPI 173, bld Haussmann**
**F-75379 Paris Cedex 08 (FR)**
Inventeur : **Ta Hong, Anh**
**THOMSON-CSF SCPI 173, bld Haussmann**
**F-75379 Paris Cedex 08 (FR)**

(74) Mandataire : **Turlèque, Clotilde et al**
**THOMSON-CSF SCPI 19, avenue de Messine**
**F-75008 Paris (FR)**

Jouve, 18, rue St-Denis, 75001 Paris, France

EP 0 149 950 B1

**Description**

L'invention concerne les émetteurs de télévision, mettant en œuvre un klystron unique, pour amplifier une onde porteuse modulée négativement en amplitude par un signal vidéo et au moins une onde porteuse modulée en fréquence par un signal audio.

Il est connu de réaliser des émetteurs de télévision comportant deux amplificateurs de puissance distincts, pour amplifier séparemment un signal d'image et un signal de son en mettant en œuvre respectivement deux klystrons dont la densité de faisceau électronique est modulée pour obtenir une amélioration du rendement. La demande de brevet français FR-A-956 015 déposée le 4 décembre 1963 par la Compagnie Générale de Télégraphie Sans Fil, décrit un émetteur de télévision à amplification séparée pour le signal d'image et un signal de son, dans lequel un signal d'image est appliqué à une cavité d'entrée d'un klystron, et dans lequel la densité du faisceau électronique du klystron est modulée en appliquant à une anode de modulation les impulsions de synchronisation du signal d'image avec une durée et une amplitude telles que, pendant ces impulsions de synchronisation, le klystron peut fournir sa puissance de crête, alors que pendant le reste du temps il ne peut fournir qu'une puissance correspondant à 0,56 fois sa puissance de crête. La consommation de l'amplificateur du signal d'image est réduite ainsi d'environ 30 %, par rapport à un amplificateur de signal d'image comportant un klystron sans modulation de la densité du faisceau.

Par ailleurs, il est connu de moduler la densité du faisceau électronique d'un klystron amplificateur d'un signal d'image, en modulant la tension de polarisation d'un wehnelt ou d'une grille placée à proximité de la cathode du klystron. Le brevet français FR-A-1 457 632 déposé le 21 septembre 1965 par la Compagnie Générale de Télégraphie Sans Fil, décrit un émetteur de télévision comportant un modulateur de signal d'image comportant un klystron dont la grille reçoit un signal vidéo.

Un klystron dont le rendement est amélioré par une modulation de la densité de faisceau en fonction du signal vidéo ne permet pas d'amplifier simultanément un signal d'image et un signal de son car la variation de la caractéristique de transfert du klystron, lorsque la densité du faisceau électronique est modifiée, provoque une variation de l'amplitude et du retard de groupe du signal de son. Celui-i est constitué d'une porteuse modulée en fréquence et transposée en ultra haute fréquence. La variation du retard de groupe provoque donc une modulation de phase parasite du signal de son.

L'objet de l'invention est de remédier à ce défaut pour réaliser un émetteur comportant un klystron unique pour amplifier un signal d'image et un signal de son, plus économique que les émetteurs à deux amplificateurs distincts, tout en conservant l'amélioration de rendement procurée par une modulation de la densité du faisceau électronique.

Selon l'invention un émetteur de télévision comportant un klystron commun pour l'image et le son, est caractérisé en ce qu'il comporte :
— un klystron, dont une cavité de sortie est couplée à la sortie de l'émetteur ;
— des moyens pour fournir à une électrode de commande de la densité du faisceau électronique du klystron, un signal impulsionnel d'amplitude, de durée, et de période tels que le klystron peut fournir une puissance égale à sa puissance de crête pendant des intervalles de temps correspondant aux impulsions de synchronisation du signal d'image et telles que le klystron ne peut fournir qu'une fraction déterminée de sa puissance de crête pendant le reste du temps, cette fraction correspondant à la puissance à fournir pendant le palier de suppression du signal d'image ;
— des moyens pour moduler négativement l'amplitude d'un signal à fréquence intermédiaire, par un signal vidéo ;
— des moyens pour générer au moins un second signal à fréquence intermédiaire modulée en fréquence par un signal audio ;
— des moyens de correction pour modifier le retard de groupe et l'amplitude de chaque second signal à fréquence intermédiaire, pour compenser la variation de retard de groupe et la variation d'amplitude du signal fournie par la cavité de sortie du klystron, ces variations étant causées par la commande de densité du faisceau électronique ;
— des moyens pour additionner le premier signal à fréquence intermédiaire et le second signal à fréquence intermédiaire corrigé par les moyens de correction, transposer le signal résultant à une très haute fréquence, et l'appliquer à une cavité d'entrée du klystron.

L'invention sera mieux comprise et d'autres détails apparaîtront à l'aide de la description ci-dessous et des figures l'accompagnant :
— la figure 1 représente la caractéristique de transfert d'un klystron pour deux valeurs de polarisation de sa grille ;
— la figure 2 représente le schéma synoptique d'un premier exemple de réalisation d'un émetteur de télévision selon l'invention ;
— la figure 3 représente un schéma synoptique plus détaillé d'une partie de cet exemple de réalisation ;
— la figure 4 représente un schéma synoptique d'un second exemple de réalisation de l'émetteur selon l'invention.

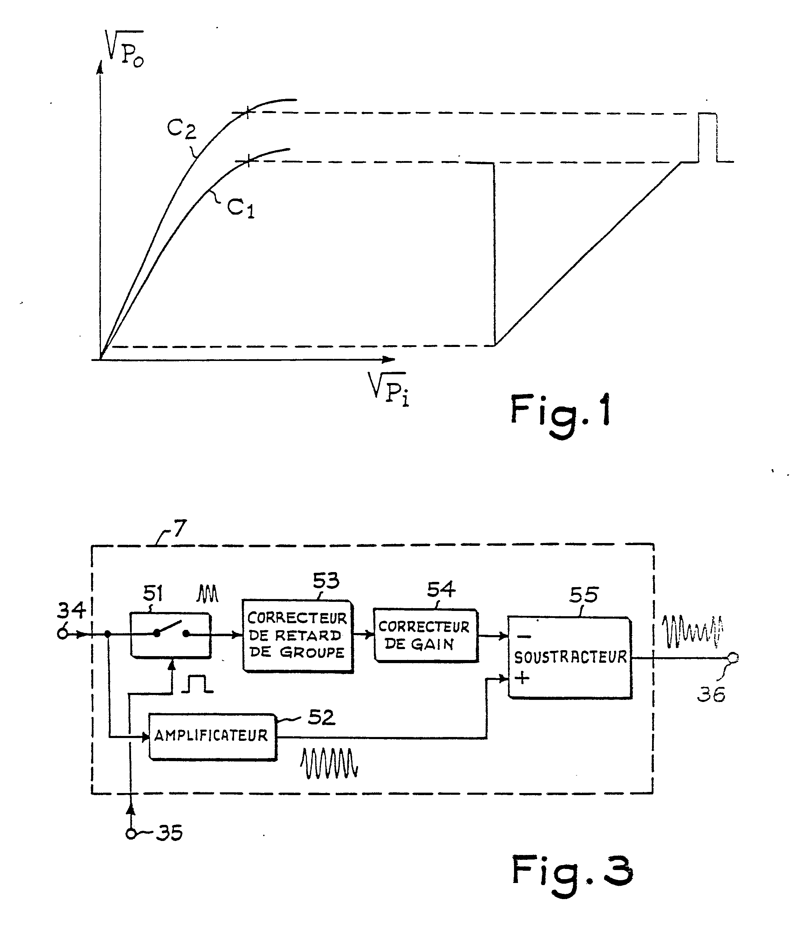

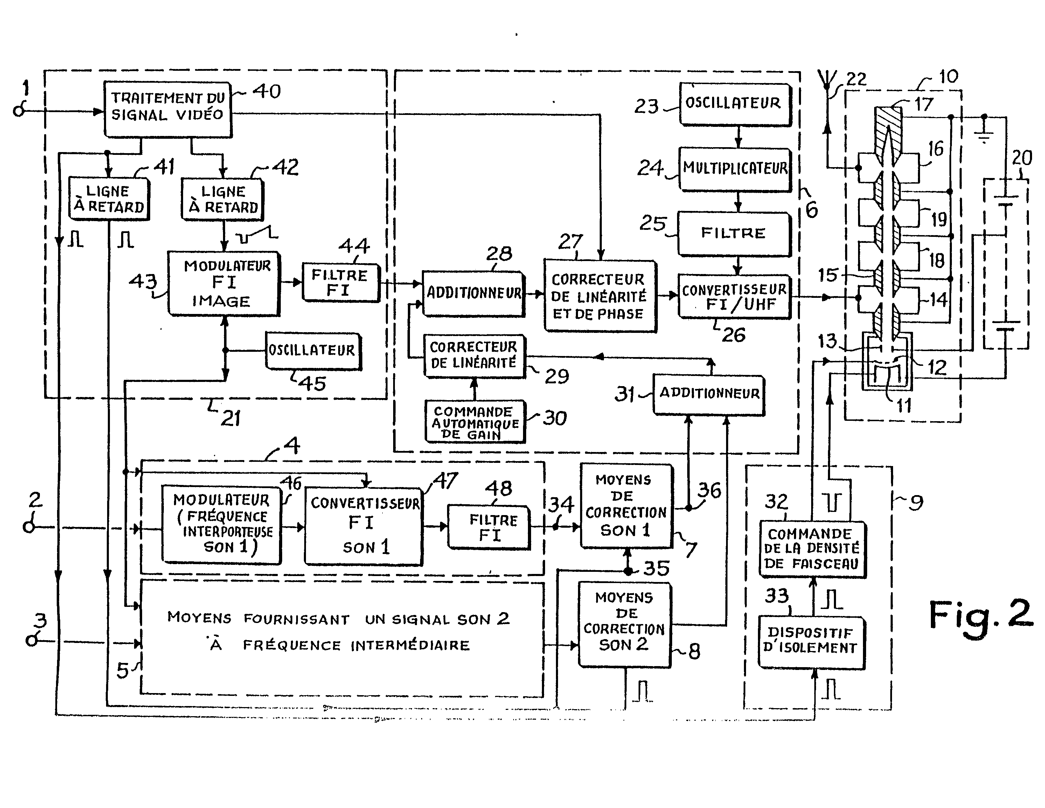

La figure 1 représente le graphe de $\sqrt{P_o}$, $P_o$ étant la puissance de sortie d'un klystron, en fonction de $\sqrt{P_i}$, $P_i$, étant la puissance d'entrée de ce klystron. La caractéristique de transfert d'un klystron dépend de la densité de son faisceau électronique, celle-ci déterminant notamment le gain et la puissance de crête que peut fournir le klystron. La densité électronique du faisceau peut être commandée par la tension de polarisation d'une grille ou d'un wehnelt proche de la cathode. La figure 1 représente une première courbe caractéristique $C_2$ correspondant à une polarisation nulle de la grille d'un klystron, par rapport à sa cathode, et une courbe caractéristique $C_1$ correspondant à une polarisation non nulle et telle que la puissance de crête que peut fournir le klystron est réduite d'environ 25 %.

L'émetteur selon l'invention comporte un klystron unique dont la grille ou le wehnelt est polarisé de façon à faire fonctionner le klystron selon la caractéristique $C_2$ pendant les impulsions de synchronisation et selon la caractéristique $C_1$ pendant le reste du temps. Sur la figure 1 est représenté aussi le graphe d'un signal vidéo correspondant à une image dont la luminosité varie du blanc au noir progressivement le long d'une ligne d'image. Les traits en pointillés relient les points de ce signal vidéo aux points de fonctionnement correspondant pour le klystron.

Pendant la durée de l'impulsion de synchronisation le klystron fonctionne avec la courbe caractéristique $C_2$, pour lui permettre de fournir sa puissance de crête, celle-ci étant répartie entre la puissance de crête du signal d'image et la puissance de crête du signal de son. Pendant le reste du temps le klystron fonctionne selon la caractéristique $C_1$ : quand la luminosité varie du blanc jusqu'au noir la puissance fournie par le klystron varie depuis une valeur proche de zéro jusqu'à une valeur proche de la puissance de crête permise par la caractéristique $C_1$ ; cette puissance de crête correspondant à la puissance de crête du signal de son, plus la puissance correspondant au niveau de suppression.

La figure 2 représente le schéma synoptique d'un exemple de réalisation d'un émetteur de télévision à amplificateur de puissance unique pour le signal d'image et pour le signal de son, ce dernier correspondant à la transmission de deux voies audio. Cet exemple d'émetteur comporte des bornes d'entrée 1, 2, 3 recevant respectivement un signal vidéo et deux signaux audio ; des moyens 21 fournissant un signal d'image à fréquence intermédiaire ; des moyens 4 et 5 fournissant des signaux de son à fréquence intermédiaire ; des moyens de correction 7 et 8 ; des moyens 6 fournissant un signal à très haute fréquence constitué en additionnant et transposant le signal d'image et les signaux de son à fréquence intermédiaire ; un klystron 10 ; des moyens 9 pour commander la densité du faisceau électronique du klystron 10 ; une antenne 22 rayonnant la puissance de sortie du klystron 10 ; et une alimentation 20 fournissant les tensions de polarisation du klystron 10.

Les moyens 21 comportent un dispositif 40 de traitement du signal vidéo, deux lignes à retard 41 et 42, un modulateur 43, un filtre passe-bande 44 et un oscillateur 45. La borne d'entrée 1 est reliée à une entrée du dispositif 40 pour lui fournir un signal vidéo. Une première sortie du dispositif 40 fourni un signal vidéo traité à la ligne à retard 42 et celle-ci le restitue à une entrée du modulateur 43 qui module un signal porteur à fréquence intermédiaire, fourni par l'oscillateur 45. Le signal porteur ainsi modulé est filtré par le filtre passe-bande 44 et constitue un signal à fréquence intermédiaire qui est appliqué à une première entrée des moyens 6 pour y être additionnés aux signaux à fréquence intermédiaire portant les deux signaux audio.

Une seconde sortie du dispositif 40 fournit un signal de commande du niveau de suppression, à une seconde entrée des moyens 6. Une troisième sortie du dispositif 40 fournit des impulsions de synchronisation extraite du signal vidéo ; elle est reliée à une troisième sortie des moyens 21 par une liaison directe et à une quatrième sortie par l'intermédiaire de la ligne à retard 41. Cette troisième sortie et cette quatrième sortie sont reliées respectivement à une entrée des moyens 9 et à une entrée des moyens 7 et 8. Une cinquième sortie des moyens 21, reliée à la sortie de l'oscillateur 45, est reliée à une entrée des moyens 4 et à une entrée des moyens 5.

La ligne à retard 42 retarde le signal vidéo fourni par la première sortie du dispositif 40, par rapport aux impulsions de synchronisation fournies par la troisième sortie, pour compenser notamment le temps de transit des électrons entre la grille de commande de densité du faisceau électronique du klystron 10, où sont appliqués les impulsions de synchronisation, et la cavité d'entrée du klystron 10, où est appliqué un signal à ultra haute fréquence modulé par le signal vidéo.

La ligne à retard 41 retarde le signal de synchronisation commandant les moyens de correction 7 et 8 afin de compenser notamment le temps de transit des signaux de son à travers les moyens 4 et 5.

L'amplitude des impulsions de synchronisation du signal vidéo fourni par la première sortie du dispositif est réduite à 15 % de l'amplitude maximale de ce signal vidéo, au lieu des 25 % habituels, afin de compenser le surcroît de gain du klystron 10 pendant la durée des impulsions de synchronisation.

Les moyens 4 comportent un modulateur 46, un convertisseur 47, et un filtre passe-bande 48. Une entrée et une sortie du modulateur 46 sont reliées respectivement à la borne d'entrée 2 et à une première entrée du convertisseur 47. Une seconde entrée du convertisseur 47 est reliée à la cinquième sortie des moyens 21 c'est-à-dire à la sortie de l'oscillateur 45. Une sortie du convertisseur 47 est reliée à une sortie des moyens 4 par l'intermédiaire du filtre passe-bande 48, dont la fréquence centrale est égale à la fréquence intermédiaire.

La borne d'entrée 2 reçoit un signal audio et le fournit à l'entrée du modulateur 46 où il module en fréquence un signal appelé interporteuse, fourni par un oscillateur non représenté. L'interporteuse modulée est transposée à une fréquence dite fréquence intermédiaire (FI) par le convertisseur 47 qui reçoit pour oscillation locale un signal fourni par l'oscillateur 45 des moyens 21. Le signal à fréquence intermédiaire fourni par le convertisseur 47 est filtré par le filtre 48 puis est transmis à une borne d'entrée 34 des moyens de correction 7, qui est reliée à la sortie des moyens 4.

La borne d'entrée 3 reçoit un second signal audio qui est appliqué à des moyens 5 et à des moyens 8 analogues respectivement aux moyens 4 et 7. Une borne de sortie 36 des moyens 7 et une borne de sortie des moyens 8 sont reliées respectivement à une troisième et une quatrième entrée des moyens 6.

Les moyens 6 comportent un oscillateur 23, un multiplicateur de fréquence 24, un filtre passe-bande 25, un convertisseur 26, un correcteur 27 de linéarité et de phase, un additionneur analogique 28, un correcteur de linéarité 29, un dispositif 30 de commande automatique de gain, et un additionneur analogique 31. La troisième et la quatrième entrée des moyens 6 sont reliées respectivement à deux entrées de l'additionneur analogique 31 et une sortie de ce dernier est reliée à une entrée du correcteur de linéarité 29. Le correcteur 29 possède une entrée de commande, reliée à une sortie du dispositif 30 de commande automatique de gain, et une sortie reliée à une première entrée de l'additionneur 28. Une seconde entrée de l'additionneur 28 est reliée à la première entrée des moyens 6 et une sortie est reliée à une première entrée du correcteur 27 de linéarité et de phase. Une seconde entrée du correcteur 27 est reliée à la deuxième entrée des moyens 6 pour recevoir le signal de commande du niveau de suppression.

Une première entrée du convertisseur 26 est reliée à une sortie du filtre 25, une seconde entrée est reliée à une sortie du correcteur 27, et une sortie constitue la sortie des moyens 6 et est reliée à une première entrée du klystron 10. La sortie de l'oscillateur 23 est reliée à une entrée du multiplicateur 24 et une sortie de ce dernier est reliée à une entrée du filtre 25.

L'additionneur 31 additionne les signaux à fréquence intermédiaire portant respectivement le premier et le second signal audio et fournit le signal résultant au correcteur de linéarité 29 afin de corriger ses variations d'amplitude. Le correcteur 29 fournit un signal à fréquence intermédiaire, d'amplitude constante et portant les deux signaux audio. Ce signal est additionné par l'additionneur 28 au signal à fréquence intermédiaire portant le signal vidéo. Le signal fourni par la sortie de l'additionneur 28 est corrigé en linéarité et en phase par le correcteur 27 en fonction du signal de commande fourni par le dispositif 40 de traitement du signal vidéo. La réalisation des dispositifs 40, 27 et 29 est à la portée de l'homme de l'art car se sont des dispositifs classiques dans les émetteurs de télévision.

Le signal à fréquence intermédiaire fourni par la sortie du correcteur 27 porte le signal vidéo et les interporteuses modulées par les deux signaux audio. Ce signal à fréquence intermédiaire est transposé à une ultra haute fréquence qui est la fréquence d'émission, au moyen du convertisseur 26 recevant une fréquence d'oscillation locale fournie par l'oscillateur 23, le multiplicateur 24, et le filtre 25.

Le klystron 10 comporte une cathode 11, une grille 12 de commande de la densité du faisceau électronique, une anode 13, une cavité d'entrée 14, deux cavités intermédiaires 18 et 19, une cavité de sortie 16, un collecteur 17 et des tubes 15 intermédiaires entre les cavités. Le générateur d'alimentation 20 comporte une borne positive reliée au potentiel de référence de l'émetteur et reliée au collecteur 17 et aux tubes intermédiaires 15. Il comporte en outre une borne négative reliée à la cathode 11, et une borne à un potentiel intermédiaire, reliée à l'anode 13. La première entrée du klystron 10 est couplée à la cavité d'entrée 14 et lui fournit le signal de sortie du convertisseur 26. Une entrée différentielle, connectée à la grille 12 et à la cathode 11, est reliée à une sortie différentielle des moyens 9. Une sortie du klystron est couplée à la cavité de sortie 16 et est reliée à l'antenne 22.

Les moyens de commande 9 comportent un dispositif 32 de commande de la densité de faisceau et un dispositif 33 d'isolement. Une entrée des moyens 9 est reliée à la troisième sortie du dispositif 40 de traitement du signal vidéo, pour recevoir des impulsions de synchronisation, et est reliée à une entrée du dispositif d'isolement 33. Celui-ci les retransmet au dispositif 32 en assurant l'isolement du dispositif 32 qui est porté au potentiel de la cathode 11 du klystron, c'est-à-dire 20 000 volts par rapport au potentiel de référence. Deux sorties du dispositif 32 constituent la sortie différentielle des moyens 9. Celle-ci fournit des impulsions de tension synchrones avec des impulsions de synchronisation pour commander le potentiel de la grille 12 par rapport à la cathode 11. Le dispositif d'isolement 33 peut être réalisé par un transformateur ou bien par une diode électroluminescente, couplée à une photodiode par une fibre optique. Sa réalisation est simple puisqu'il s'agit de transmettre une impulsion de durée déterminée et d'amplitude déterminée, et non pas un signal analogique.

La figure 3 représente un exemple de réalisation des moyens de correction 7, qui sont analogues aux moyens de correction 8. Ces moyens de correction 7 comportent un interrupteur analogique 51, un amplificateur 52, un correcteur de retard de groupe 53, un correcteur de gain 54, et un soustracteur analogique 55. La borne d'entrée 34 est reliée d'une part à une entrée du commutateur 51 et, d'autre part, à une entrée de l'amplificateur 52. Une sortie du commutateur 51 et une entrée de commande sont reliées respectivement à une entrée du correcteur 53 et à la borne d'entrée 35. Une sortie du correcteur 53 est reliée à une entrée « — » du soustracteur 55 par le correcteur de gain 54. Une sortie de l'amplificateur 52 est reliée à une entrée « + » du soustracteur 55, et la sortie de ce dernier est reliée à la borne de sortie 36. Le signal à fréquence intermédiaire reçu par la borne d'entrée 34 est amplifié par l'amplificateur 52 et est transmis à la borne de sortie 36 par le soustracteur 55 sans être modifié si le commutateur 51 est ouvert, c'est-à-dire en dehors des intervalles de temps correspondant aux impulsions de synchronisation du signal d'image. Lorsqu'une impulsion de synchronisation est appliquée à la borne d'entrée 35, elle commande la fermeture du commutateur 51. Le signal à fréquence intermédiaire transmis par le commutateur 51, subit une correction de retard de groupe et une atténuation dans le correcteur de gain 54, puis est soustrait au signal fourni par la sortie de l'amplificateur 52, grâce au soustracteur 55. Le signal à fréquence intermédiaire que le soustracteur 55 fournit à la borne de sortie 36 est donc un signal d'amplitude réduite et dont la phase est modifiée pendant les intervalles de temps correspondant à la synchronisation. Les correcteurs 53 et 54 sont réglés de façon à compenser l'effet de la variation du retard de groupe et de la variation du gain du klystron pendant les intervalles de temps correspondant aux impulsions de synchronisation.

L'invention ne se limite pas à l'exemple de réalisation décrit ci-dessus, de nombreuses variantes sont possibles et à la portée de l'homme de l'art. Il est possible notamment de ne pas mettre les moyens de correction 7 entre le filtre à fréquence intermédiaire 48 et l'additionneur 31 mais entre la sortie du modulateur 46 et le convertisseur à fréquence intermédiaire 47.

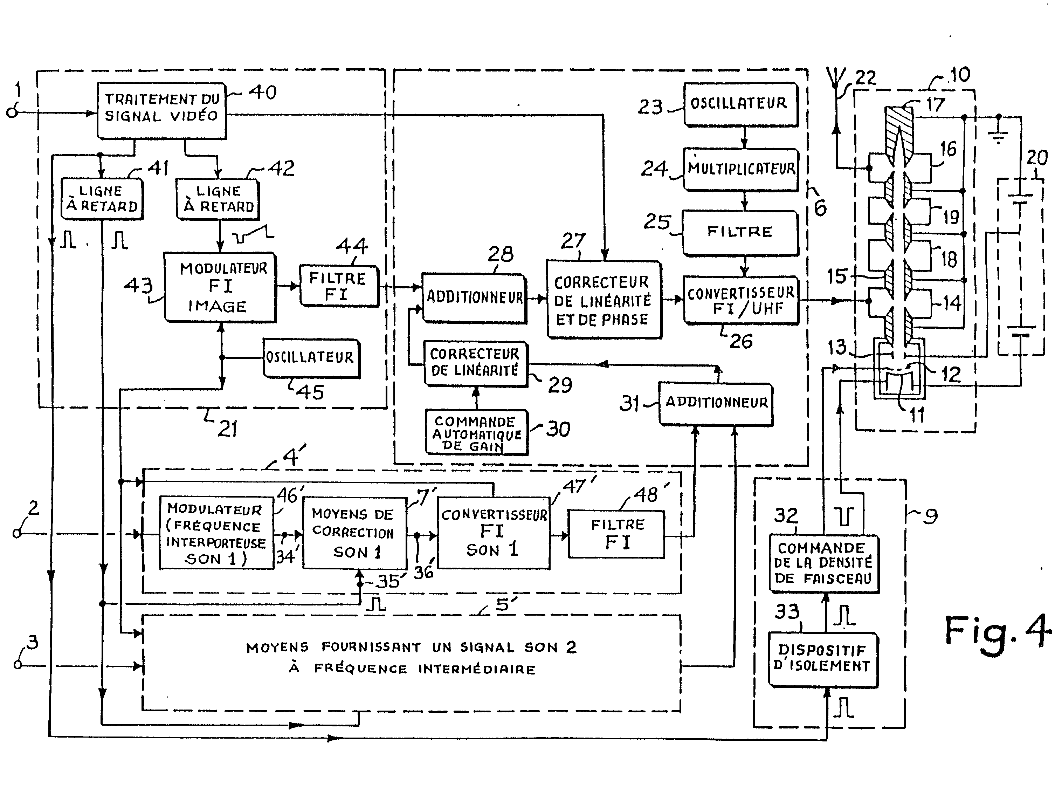

La figure 4 représente le schéma synoptique d'un second exemple de réalisation de l'émetteur selon l'invention. Ses éléments sont identiques à ceux du premier exemple et portent des références identiques, sauf les moyens 4 et 7 qui sont remplacés par des moyens 4', et les moyens 5 et 8 qui sont remplacés par des moyens 5'. Les moyens 4' comportent des moyens de correction 7', et comportent un modulateur 46', un convertisseur 47', et un filtre passe-bande 48' identiques respectivement au modulateur 46, au convertisseur 47, et au filtre 48.

Les moyens de correction 7' sont analogues aux moyens de correction 7, sauf qu'ils fonctionnent à la fréquence de l'interporteuse au lieu de la fréquence intermédiaire, et qu'ils sont intercalés entre la sortie du modulateur 46' et l'entrée du convertisseur 47'. L'entrée du modulateur 46' constitue une première entrée des moyens 4' et est reliée à la borne d'entrée 2. La sortie du convertisseur 47' est reliée par le filtre 48' à une sortie des moyens 4' qui est reliée à la troisième entrée des moyens 6. Les moyens 5' sont analogues aux moyens 4'.

L'émetteur selon l'invention a pour principal avantage une réalisation moins coûteuse que celle d'un émetteur classique comportant un amplificateur de puissance à klystron pour le son et un émetteur de puissance à klystron pour l'image, tout en ayant un excellent rendement grâce au procédé de modulation de la densité du faisceau électronique. Ce procédé permet d'obtenir un rendement du klystron de l'ordre de 30 % alors qu'en son absence le rendement est de l'ordre de 23 %.

**Revendications**

1. Emetteur de télévision comportant un klystron commun pour l'image et le son, caractérisé en ce qu'il comporte :
   — un klystron (10), dont une cavité de sortie (16) est couplée à la sortie de l'émetteur ;
   — des moyens (9) pour fournir à une électrode (12) de commande de la densité du faisceau électronique du klystron (10), un signal impulsionnel d'amplitude, de durée, et de période telles que le klystron (10) peut fournir une puissance égale à sa puissance de crête pendant des intervalles de temps correspondant aux impulsions de synchronisation du signal d'image et telles que le klystron (10) ne peut fournir qu'une fraction déterminée de sa puissance de crête pendant le reste du temps, cette fraction correspondant à la puissance à fournir pendant le palier de suppression du signal d'image ;
   — des moyens (21) pour moduler négativement l'amplitude d'un signal à fréquence intermédiaire, par un signal vidéo ;
   — des moyens (4) pour générer au moins un second signal à fréquence intermédiaire modulé par un signal audio ;
   — des moyens de correction (7, 8) pour modifier le retard de groupe et l'amplitude de chaque second signal à fréquence intermédiaire, pour compenser la variation de retard de groupe et la variation d'amplitude du signal fourni par la cavité de sortie (16) du klystron (10), ces variations étant causées par la commande de densité du faisceau électronique ;
   — des moyens (6) pour additionner le premier signal à fréquence intermédiaire et le second signal à fréquence intermédiaire corrigé par les moyens de correction (7, 8), transposer le signal résultant à une très haute fréquence, et l'appliquer à une cavité d'entrée (14) du klystron (10).

2. Emetteur selon la revendication 1, caractérisé en ce que les moyens de correction (7, 8), pour chaque signal audio comportent un correcteur de retard de groupe (53) et un correcteur de gain (54) corrigeant le second signal à fréquence intermédiaire correspondant, en modifiant le retard de groupe et l'amplitude de ce second signal à fréquence intermédiaire.

3. Emetteur selon la revendication 1, caractérisé en ce que les moyens (4) pour générer au moins un second signal à fréquence intermédiaire modulé en fréquence par un signal audio, comportent des moyens (46') pour moduler en fréquence un signal appelé interporteuse, et des moyens (47', 48') pour transposer à fréquence intermédiaire l'interporteuse modulée ; et en ce que les moyens de correction (7'), pour chaque signal audio, comportent un correcteur de retard de groupe (53) et un correcteur de gain (54) corrigeant le second signal à fréquence intermédiaire correspondant, en modifiant le retard de groupe et l'amplitude de l'interporteuse modulée par ce signal audio, avant la transposition de la fréquence de cette interporteuse.

**Claims**

1. A television transmitter comprising a common klystron for image and audio characterized in that it comprises :
— a klystron (10) whose one output cavity (16) is coupled with the output of the transmitter ;
— means (9) to supply one klystron electron beam density control electrode (12) with an impulse signal for amplitude, duration and cycle such that the klystron (10) is able to supply a power equal to its peak power during time intervals corresponding to the sync surges of the image signal and such that the klystron (10) is only able to supply a given fraction of its peak power during the remainder of the time, such fraction corresponding to the power to be supplied during the image signal suppression porch ;
— means (21) for negatively modulating the amplitude of an intermediate frequency signal by a video signal ;
— means (4) for generating at least a second modulated intermediate frequency signal modulated by a video signal ;
— correcting means (7 and 8) in order to modify the group delay and the amplitude of each second intermediate frequency signal, for compensating the variation in the group delay and the variation in amplitude of the signal supplied by the output cavity (16) of the klystron (10), these variations being caused by the electron beam density control ;
— and means (6) for adding the first intermediate frequency signal and the second intermediate frequency signal as corrected by the correcting means (7 and 8), for transposing the resulting signal to a very high frequency and for passing it to the input cavity (14) of the klystron (10).

2. The transmitter as claimed in claim 1 characterized in that the correcting means (7 and 8) for each audio signal comprise a group delay corrector (53) and a gain corrector (54) correcting the second intermediate frequency signal corresponding, while modifying the group delay and the amplitude of this second signal, to the intermediate frequency.

3. The transmitter as claimed in claim 1 characterized in that the means (4') for generating at least a second intermediate frequency signal, which is frequency modulated by an audio signal, comprise means (46') for frequency modulating an intercarrier signal and means (47' and 48') for transposing the modulated intercarrier to an intermediate frequency ; and in that the correcting means (7'), for each audio signal, comprise a group delay corrector (53) and a gain corrector (54) correcting the second corresponding second intermediate frequency signal while modifying the group delay and the amplitude of the modulated intercarrier modulated by this audio signal, prior to the transposition of the frequency of this intercarrier.

**Patentansprüche**

1. Fernsehsender mit einem für das Bild und den Ton gemeinsamen Klystron, dadurch gekennzeichnet, daß er umfaßt :
— ein Klystron (10), wovon ein Ausgangshohlraum (16) mit dem Ausgang des Senders gekoppelt ist ;
— Mittel (9), um einer Elektrode (12) zur Steuerung der Dichte des Elektronenbündels des Klystrons (10) ein Impulssignal von solcher Amplitude, Dauer und Periode aufzugeben, daß das Klystron (10) eine Leistung abgeben kann, die während Zeitintervallen, die den Synchronisationsimpulsen des Bildsignals entsprechen, gleich seiner Spitzenleistung ist, und daß das Klystron (10) nur einen bestimmten Bruchteil seiner Spitzenleistung während der übrigen Zeit abgeben kann, wobei dieser Bruchteil der zu liefernden Leistung während der Bildsignalaustastlücke entspricht ;
— Mittel (21), um über ein Videosignal die Amplitude eines Zwischenfrequenzsignals in Negativrichtung zu modulieren ;
— Mittel (4), um wenigstens ein zweites Zwischenfrequenzsignal, das durch ein Audiosignal moduliert wird, zu erzeugen ;
— Korrekturmittel (7, 8), um die Gruppenlaufzeit und die Amplitude jedes zweiten Zwischenfrequenzsignals zu verändern, um die Änderung der Gruppenlaufzeit und diejenige der Amplitude des vom Ausgangshohlraum (16) des Klystrons (10) abgegebenen Signals zu kompensieren, wobei diese Änderungen durch die Steuerung der Dichte des Elektronenbündels verursacht sind ;
— Mittel (6) zum Addieren des ersten Zwischenfrequenzsignals und des zweiten Zwischenfrequenzsignals, das von den Korrekturmitteln (7, 8) korrigiert wird, zum Umsetzen des resultierenden Signals in eine sehr hohe Frequenz und zum Anlegen desselben an einen Eingangshohlraum (14) des Klystrons (10).

2. Sender nach Anspruch 1, dadurch gekennzeichnet, daß die Korrekturmittel (7, 8) für jedes Audiosignal ein Gruppenlaufzeit-Korrekturelement (53) sowie ein Verstärkungsfaktor-Korrekturelement (54) umfassen, die das entsprechende zweite Zwischenfrequenzsignal dadurch korrigieren, daß sie die Gruppenlaufzeit und die Amplitude dieses zweiten Zwischenfrequenzsignals verändern.

3. Sender nach Anspruch 1, dadurch gekennzeichnet, daß die Mittel (4') zum Erzeugen wenigstens eines zweiten Zwischenfrequenzsignals, das über ein Audiosignal frequenzmoduliert wird, Mittel (46') umfassen, um eine Frequenzmodulation des als Zwischenträger bezeichneten Signals durchzuführen, sowie Mittel (47', 48') umfassen, um den modulierten Zwischenträger in den Zwischenfrequenz bereich umzusetzen, und daß die Korrekturmittel (7') für jedes Audiosignal ein Gruppenlaufzeit-Korrekturelement (53) sowie ein Verstärkungsfaktor-Korrekturelement (54) umfassen, die das entsprechende zweite Zwischenfrequenzsignal dadurch korrigieren, daß sie die Gruppenlaufzeit und die Amplitude des von diesem Audiosignal modulierten Zwischenträgers vor der Umsetzung der Frequenz dieses Zwischenträgers verändern.

Fig.1

Fig.3

1

Fig. 2

0 149 950

Fig. 4

0 149 950